# EUROPEAN PATENT SPECIFICATION

(11) **EP 1 720 701 B1**
(45) Date of publication and mention of the grant of the patent: **06.05.2009**
(21) Application number: 05705563.4
(22) Date of filing: 12.01.2005
(51) Int. Cl.: B32B 27/30, C08L 27/04, C08F 8/22

(54) **HIGH TEMPERATURE EXTERIOR BUILDING PRODUCTS**
WARMFESTE ÄUSSERE GEBÄUDEPRODUKTE
PRODUITS DE CONSTRUCTION EXTERIEURS RESISTANT AUX HAUTES TEMPERATURES

(30) Priority: 12.01.2004 US 535889 P; 11.01.2005 US 33225
(43) Date of publication of application: 15.11.2006
(60) Divisional application: 09003355.6
(73) Proprietor: Lubrizol Advanced Materials, Inc., Cleveland, OH 44141-3247 (US)
(72) Inventor: DETTERMAN, Robert, E., Medina, OH 44256 (US)
(74) Representative: Weber, Thomas
(86) International application number: PCT/US2005/000963
(87) International publication number: WO 2005/070670

(56) References cited:
- WO-A-03/074274
- US-A- 4 160 793
- US-A1- 2002 147 246
- PATENT ABSTRACTS OF JAPAN vol. 014, no. 450 (M-1030), 27 September 1990 (1990-09-27) & JP 02 179743 A (NIPPON CARBIDE IND CO INC), 12 July 1990 (1990-07-12)

## Description

### Field of the Invention

This invention pertains to siding, trim, decking, fencing, roofing and other construction materials suitable for higher temperature applications.

### Background of the Invention

PVC, also known as vinyl, has become very common in its use as house siding, trim, decking and fencing. Because of its good weathering properties, low cost and ease of installation, PVC has gained wide acceptance as a construction material. However, because of its inability to withstand higher temperatures, PVC siding is used mainly in cooler climates, such as the northern states of the U.S.A. PVC's use is typically avoided in warmer climates, such as exist in the U.S. states of Florida and Arizona.

Recently, another problem has been found with PVC siding in cooler climates. More residential structures are being built with irregular exterior walls and closer to adjacent structures. This has led to structures having a problem with reflective heat causing the siding and trim to distort from the heat. The excess heat is generated as a result of the suns rays shining on a window and being reflected to an adjacent wall of the same structure or a neighboring structure.

Also, PVC is normally sold in white or light pastel colors for such construction applications. Dark colors, such as red, black, brown and the like, absorb more energy from the sun and cause the temperature of the material to exceed the useable temperature of PVC. Consumers and builders would like the option of using dark colors for some structures.

It would be desirable to have a weather resistant product which could withstand greater temperatures and thus be used in warm climates and be suitable in dark colors and withstand reflective heat.

### Summary of the Invention

It is an object of this invention to make weather resistant articles which can be used in construction applications and are useable in higher temperature environments than PVC (vinyl).

It is also an object of this invention to make weather resistant articles in dark colors.

It is a further object of this invention to make siding panels and siding trim components which have an insulating layer and, when installed, a visible layer capable of withstanding temperatures greater than 96.1°C (205°F). The visible layer can be made in dark colors.

It is an additional object of this invention to make weather resistant products such as decking, fencing and roofing which can withstand high temperatures in use and be able to be made in dark colors.

The above objectives are accomplished by using a composition comprising chlorinated polyvinyl chloride (CPVC) having a chlorine content of 67-71 wt.% and which has a heat distortion temperature greater than 96.1°C (205°F). The CPVC composition can be extruded into siding, siding trim components, fencing, decking or roofing, and can be colored with pigments to obtain dark colors or light colors.
US 2002/147246 discloses sided moulding articles comprising a chlorinated vinyl chloride resin, and having a high heat resistance. WO 03/074274 discloses laminate articles for building applications comprising chlorinated PVC, and having resistance to heat distortion.

### Description of the Invention

The articles of this invention are rigid thermoplastic materials with good weather resistance and have a high heat distortion temperature. Chlorinated polyvinyl chloride (CPVC) compositions are used to make the articles by using an extrusion process.

The CPVC compositions contain CPVC polymer (resin). CPVC polymers are available commercially worldwide from a variety of sources, including Noveon, Inc. of Cleveland, Ohio U.S.A.

CPVC for use herein is preferably prepared by the post-chlorination of suspension or mass polymerized PVC. Suspension polymerization techniques are well established in the art and set forth in the Encyclopedia of PVC, pp. 76-85, published by Marcel Decker, Inc. (1976) and need not be discussed in great detail here.

CPVC is obtained by chlorinating homopolymers or copolymers containing less than 50% by weight of one or more copolymerizable comonomers. Suitable comonomers for vinyl chloride include acrylic and methacrylic acids; esters of acrylic and methacrylic acid, wherein the ester portion has from 1 to 12 carbon atoms, for example methyl-, ethyl-, butyl-, ethylhexyl acrylates and the like; methyl-, ethyl-, butyl methacrylates and the like; hydroxyalkyl esters of acrylic and methacrylic acid, for example hydroxymethyl acrylate, hydroxyethyl acrylate, hydroxyethyl methacrylate and the like; glycidyl esters of acrylic and methacrylic acid, for example glycidyl acrylate, glycidyl methacrylate and the like; alpha, beta-unsaturated dicarboxylic acids and their anhydrides, for example maleic acid, fumaric acid, itaconic acid and acid anhydrides of these, and the like; acrylamide and methacrylamide; acrylonitrile and methacrylonitrile; maleimides, for example, N-cyclohexyl maleimide; olefin, for example ethylene, propylene, isobutylene, hexene, and the like; vinylidene halide, for example, vinylidene chloride; vinyl ester, for example vinyl acetate; vinyl ether, for example methyl vinyl ether, allyl glycidyl ether, n-butyl vinyl ether and the like; crosslinking monomers, for example diallyl phthalate, ethylene glycol dimethacrylate, methylene bis-acrylamide, tracrylyl triazine, divinyl ether, allyl silanes and the like; and including mixtures of any of the above comonomers. Comonomers as well as crosslinking comonomers are preferably absent. That is, preferred are homopolymers and uncrosslinked CPVC polymers.

The molecular weight as measured by I.V. of precursor polyvinyl chloride for the CPVC polymer will range from about 0.4 to about 1.6, preferably 0.5 to 1.2 and most preferably from about 0.7 to 1.0 I.V. The inherent viscosity is a representative measure of the molecular weight of a polymer and is obtained in accordance with ASTM procedure No. D-1243-66. The choice of molecular weight is made by considering the shape and intricacy of the profile, the processing conditions and the physical property balance desired. If the molecular weight is too low, there may be insufficient melt strength and dimensional stability of the hot extrudate will suffer, and if the molecular weight is too high, the compound may not be processible under the desired conditions. Excellent results are obtained under a variety of conditions and cross-sectional shapes using an I.V. of the PVC precursor of about 0.85 to 0.95.

Chlorination of PVC can be carried out in any conventional manner as known to the art and to the literature to obtain a chlorinated base polymer having higher than 57 percent by weight chlorine up to about 74 percent by weight based upon the total weight of the polymer, however, in the practice of the invention, the use of a major amount of CPVC having a chlorine content of from 67% to about 71 % chlorine is described.

The preferred method of post-chlorination is by the aqueous suspension chlorination method. There are considerations relative to this method wherein the preferred mode of chlorination employs a relatively concentrated aqueous suspension of the precursor PVC. The most preferred method results in a CPVC resin having a density which does not deviate more than about 20 percent from the mean density, and a surface area which does not deviate more than 30 percent from the mean surface area is more desirable. A concentration of about 15 to about 35 weight percent of solids in the suspension is preferred. Generally, a concentration of the suspension higher than the specified range results in less uniform chlorinated product, while concentrations below 15 percent yield uniform product, but are not as economical. By "aqueous suspension" of PVC base polymer we refer to a slurry-like mixture of base polymer macrogranules suspended in water. This process is particularly directed to a batch process.

It is desired that oxygen be removed from the aqueous suspension before chlorination is initiated. This may be effected in any convenient manner, and assisted with agitation. Heating as may be required is preferably done after Cl₂ is sparged into suspension from a liquid Cl₂ cylinder until the pressure in the reactor reaches about 172.4 kPa (25 psig), at which point the suspension is saturated with Cl₂. It is preferred that this pressure be somewhat higher, that is in the range from about 241.3 kPa to about 689.4 kPa (35 psig to about 100 psig), to get the optimum results, though a pressure as low as 68.9 kPa (10 psig) and higher than 689.4 kPa (100 psig) may be employed. The amount of Cl₂ charged to the reactor is determined by weight loss in the Cl₂ cylinder. The reactor is preferably brought up to a "soak" temperature in the range from about 60°C to about 75°C at which soak temperature the suspension is maintained under agitation for a soak period in the range from about 1 minute to about 45 minutes. Excessive pressure adversely affects the porosity of the macrogranules to the detriment of the stability of the chlorinated product.

It is desirable to complete the chlorination reaction under photo-illumination, preferably with ultraviolet light, or the desired conversion of base polymer to chlorinated base polymer product does not occur. Chlorination proceeds at a rate which depends upon the pressure and temperature within the reactor, higher rates being favored at higher temperature and pressure. It is most preferred to adjust the soak temperature, the mass of resin, and the level of photo-illumination so that the temperature is "ramped" by the heat of reaction until it levels off at a finishing temperature of about 100°C. After chlorination has proceeded to the desired degree, the suspension is preferably not cooled but dumped to be centrifuged and the chlorinated polymer freed from the aqueous phase, after which HCl is removed from the product, preferably by neutralizing with an aqueous solution of alkali metal hydroxide. The product is then washed with water to free the chlorinated polymer of residual alkali, and dried, all in a conventional manner, except that the temperatures at which the operations are carried out may be in the range from about 60°C to about 100°C, which are higher than conventionally used.

The rigid CPVC compositions contain various other ingredients, in addition to the CPVC polymer, to enhance processing and performance of the articles. Ingredients such as heat stabilizers, impact modifiers, processing lubricants, antioxidants, antistats, processing aids, fillers, fibers and coloring pigments can be used in the CPVC compositions of this invention. A particular desirable additive is chlorinated polyethylene.

Chlorinated polyethylene used herein has a specific gravity of from about 1.13 to 1.4, preferably about 1.16, a residual crystallinity of from about 0 to about 25%, preferably 0 to 10%, and a chlorine content from about 25% to about 45%, preferably 35% to 44%. The chlorination can be either homogeneous or heterogenous preferably to a small extent. Surface appearance of extrudates depended on CPE molecular weight and polydispersity as measured by gel permeation chromatography and on the extrusion conditions used. Chlorination methods for CPE include aqueous suspension, solution, or gas phase methods, with the preferred method by way of suspension chlorination. CPE is commercially available from Dow Chemical Inc. The amount of CPE present ranges from about 10 to about 30 phr, preferably from about 12 to about to 25 phr, still more preferred are levels from 15 to 25 phr. The particular combination of CPVC and CPE within the scope of the present invention will be described below.

The core/shell type impact modifiers can be present but are preferably absent. These include acrylonitrile butadiene styrene terpolymers (ABS), methacrylate, acrylonitrile, butadiene, styrene (MABS) polymers and methacrylate butadiene styrene polymer (MBS). Other impact modifiers are disclosed in Plastics Compounding, Nov./Dec., 1983: "Update: Impact Modifiers for Rigid PVC," by Mary C. McMurrer. Various commercial MBS grades include Paraloid® KM-653, BTA-733 from Rohm and Haas, or Kanegafuchi Inc. B-56 and B-22; Commercial polyacrylate impact modifiers include KM^{®}-323B, and KM^{®}-330, from Rohm and Haas, Inc.; ABS grades are commercially available from GE Plastics; Inc for example, Blendex^{®} 336.

Thermal stabilizers are employed in the compounds herein and can be selected from various organic compounds, for example dibutyltin-S-S'-bi-(isooctylmercaptoacetate), dibutyl tin dilaurate, di-butyltin di-2-ethylhexyl thioglycolate, dimethyl tin di-isooctyl-thioglycolate, and the like. Tin compounds are generally used at from 1 to 5 phr (parts by weight per 100 parts by weight of CPVC resin), preferably about 2.0 to 4.0 phr.

Secondary stabilizers may be included, if desired, but are not necessary. Examples of secondary stabilizers include metal salt of phosphoric acid, polyols, epoxidized oils, and acid acceptors which are not detrimental to the base CPVC resin used. The secondary stabilizers can be used by themselves or in any combination as desired. Specific examples of metal salts of phosphoric acid include water-soluble, alkali metal phosphate salts, disodium hydrogen phosphate, orthophosphates such as mono-,di-, and tri-orthophosphates of said alkali metals, alkali metal polyphosphates, - tetrapolyphosphates and -metaphosphates and the like. Polyols such as sugar alcohols, and epoxides such as epoxidized soya oil can be used. Examples of possible acid acceptors include potassium citrate, aluminum magnesium hydroxyl carbonate hydrate, magnesium aluminum silicates and alkali metal alumino silicates. An example of commercially available aluminum magnesium hydroxy carbonate hydrate is Hysafe^{®} 510, available from the J.M. Huber Company. Examples of magnesium aluminum silicates are molecular sieves such as, for example, Molsiv^{®} Adsorbent Type 4A from UOP. Examples of alkali metal alumino silicates are zeolites such as CBV 10A Zeolite Na-Mordenite by Synthetic Products Co. The most preferred secondary stabilizer is disodium hydrogen phosphate (DSP) and is used by treating the CPVC resin. Typical levels of secondary stabilizers can range from about 0.1 wt. parts to about 7.0 wt. parts per 100 wt. parts CPVC polymer (phr).

In addition, commercially available antioxidants are used such as phenolics, BHT, BHA, various hindered phenols and various inhibitors like substituted benzophenones.

Other auxiliary components are contemplated. Antistats may be used and are commercially available under the Glycolube^{®} trademark of Lonza Corp. Exemplary lubricants are the various hydrocarbons, such as paraffins, paraffin oils, low molecular weight polyethylene, oxidized polyethylenes, fatty acids and their salts such as stearic acid and calcium stearate, fatty alcohols such as cetyl, stearyl, or octadecyl alcohol; metal soaps such as calcium or zinc salts of oleic acid; fatty amides of organic acids such as stearamide, ethylene-bis-stearamide; preferred fatty esters and partial esters such as butyl stearate, polyol esters such as glycerol monostearate, hexaglycerol distearate; and fatty ester waxes such as stearyl esters. The most preferred lubricant is oxidized polyethylene. Henkel Co. produces a variety of preferred fatty ester formulations under the Loxiol^{®} mark. Combinations of internal and external lubricants may also be used. Lubrication of the CPVC polymer compounds of the present invention is a complex art. Since several lubricants can be combined in countless variations, the total amount of lubricant may vary generally from about 2 to 10 phr, preferably from 2 to about 6 phr. Optimization of particular individual lubricant formulations is beyond the scope of the present invention, and can be achieved as one skilled in the art prefers.

Adjustment of melt viscosity can be achieved as well as increasing melt strength by optionally employing commercial acrylic process aids such as those from Rohm and Haas under the Paraloid^{®} Trademark, for example, Paraloid^{®} K-120ND, K-120N, and K-175.

Exemplary fillers are optional and include clay, wollastonite, mica, barytes, calcium carbonate, talc and silica including precipitated silicas, silica gels, metallic silicates, pyrogenic or fumed silicas and the like. These have the general formulae: SiO₂, Mₙ(SiO₃)ₓ. The values of n and x can vary with the oxidation state of the metal associated with the SiO₃ ion. The values n and x are usually integers from about 1 to about 4.

Preferred pigments are the various titanium dioxides (TiO₂) and carbon blacks which are commercially available. Preferred TiO₂ types are coated or uncoated, rutile titanium dioxide powder. An exemplary commercial grade is Ti-Pure^{®} R-100 from E.I. DuPont De Nemours and Co. Inc. (DuPont). If used, pigments such as TiO₂ are present in an amount ranging from 1 to 25 phr, more typically 3 to 15 phr, and most typically from 3 to-about 8 phr. Optional coloring pigments can be used.

Coloring pigments are used to impart the desired color of the composition. TiO₂ is the normal pigment to give a white color and carbon black is used to give a black color. Blends of color pigments are often used to achieve a color that is other than black or white. For example, a blend of TiO₂ and carbon black is used to obtain a grey color. Various other color pigments such as red, blue, green, yellow and brown are commercially available from companies such as Ferro and Clariant. The color pigments can be added to the composition as dry powders, liquid dispersions or as a concentrate in the form of a color masterbatch.

The CPVC compositions are prepared by compounding the ingredients together. The method of compounding is straight forward as any high intensity method to uniformly mix and fuse the components into a homogeneous compound such as with a Banbury/mill, followed by sheeting, slitting or extrusion into pellets, or cubes. The differences in process handling of CPVC compared with polyvinyl chloride-based compounds relate mainly to the temperature and viscosity differences and care must be taken to avoid too much work and shear burning. In the preparation of compounds, the components can be combined and mixed with a Banbury and milled on a heated roll mill. The fused compound can be extruded and chopped into cubes. Alternatively, the components can be combined in a compounding twin screw extruder. The compounds are extruded into final form at conventional stock temperatures from about 175°C to about 225°C. The components of the CPVC composition can also be blended together in powder form and the blended powder fed to an extruder.

The articles of this invention are in dark colors. PVC articles, such as house siding, are only available in white and light pastel colors. This is because the dark colors, such as black, red, dark brown and the like, absorb more heat from the sun and distort PVC articles. PVC articles can be used in cooler climates in light colors (white or pastel), but can not be used in warmer climates, such as southern and southwest U.S. climates, nor can PVC be used for house siding in dark colors, even in cooler climates.

It is customary to define color as a L value. L value is a scale of from 0 to 100. The color black would represent an L value of 0 and the color white would represent an L value of 100. When the term "dark colors" is used herein, it means the color has a L value of less than about 50, preferably less than about 40, and more preferably less than about 30.

The CPVC compositions of this invention have a high heat distortion temperature (HDT) as measured by ASTM D-648. The HDT of the compositions is greater than about 205°F, and more preferably greater than about 215°F. HDT of the composition can be varied by the chlorine content of the CPVC polymer. The higher the chlorine content, the higher the HDT. HDT of the CPVC composition can also be affected by the various compounding ingredients. Liquid or low molecular weight ingredients such as plasticizers, process aids and lubricants can lower the HDT and thus are used in small amounts. The particular HDT of the composition used to make the articles of this invention will be selected based on the service temperature the article will experience in use. For example, an article in a dark color will need a higher HDT than a light color article used in the same climate and application. Articles, such as siding and trim for siding will need a higher HDT when they are subjected to reflective heat as can occur from windows in adjacent walls or adjacent structures.

To form the CPVC composition into various articles, the extrusion process is preferred. The extruder is fed with the composition in either powder, cube or pellet form. The composition is melt processed and forced through a die into the desired shape of the article. The extruder characteristics applicable to melt processing of the CPVC compounds of the present invention include:
Head pressure rating of at least 51.7 MPa (7500 psi).
Extruder drive/gearbox capable of generating high torque at low rpm.
Vacuum venting to remove volatile components, moisture and entrapped air.
A barrel L/D of at least 16/1 for twin screw; generally at least 20/1 for single screw.
Temperature controllers able to control within +/- 2.78°C (+/-5°F) or preferably +/- 1.11°C (+/-2°F). Accurately controllable powder metering screw for powder compounds.

A ramped barrel temperature profile is advisable with a zone nearest the hopper set at 180°C and the zone nearest the die at about 195°C for 1.91 cm (0.75 inch) diameter screw. There can be used calibrating blocks at the exit end to assist in proper dimension sizing as the hot profile is cooled. Air streams can be used to improve heat loss, and for more close tolerances, vacuum water sizing devices can be used. The extent to which one chooses to employ calibrator blocks and air or water sizing will depend on dimension tolerances for the particular profile shape, the intended output volume of any one profile article and the number of different profiles made with a particular production set. These considerations are beyond the scope of the disclosure.

The CPVC composition described above is the preferred composition for making siding and siding trim components. For articles which are thicker, other CPVC compositions may be used and in some cases preferred. The CPVC composition used will vary depending on the requirements of the end use application. Commercial CPVC compositions are available from Noveon, Inc.

When the desired article is a house or siding trim, the CPVC composition is extruded to a thickness of from about 0.381 mm (0.015 inches) to about 1.27 mm (0.050 inches). The siding and trim thickness is typically about 0.762 mm (0.030 inches) to about 1.143 mm (0.045 inch). The term "siding trim" as used herein has the customary industry meaning and includes trim pieces such as outside corners, inside corners, channels around windows and doors, and the like, used in conjunction with the installation of siding. The siding and trim of this invention can be thinner than PVC siding because the CPVC material is able to withstand greater heat and is more resistant to deformations. The siding and trim can be embossed to provide a wood grain surface for aesthetic appeal. The siding can be applied horizontal to a structure or can be applied vertical.

If articles such as decking and fencing are desired, the extrusion would be thicker than that for siding because of the structural requirements. Decking and fencing will typically have a thickness of greater than 1.27 mm (0.05 inches) and preferably greater than 0.254 cm (0.1 inch). Decking and fencing are typically extruded with a cross section in a substantially rectangular shape and can have rounded corners to aid in the extrusion process. The term "rectangular shape" as used herein is intended to include rectangle shapes which have rounded corners. The rectangular shape can be hollow inside to save weight or can have reinforcing webs to add strength and rigidity. The extruded decking or fencing boards can also be filled with foam add rigidity. Decking boards can also be embossed with a non-skid surface to provide safety when wet. Decking materials include the floor of the deck as well as supporting posts and rails, which can all be made from the CPVC compositions in this invention. Fencing includes the fence boards or rails as well as the posts. The decking and fencing articles of this invention eliminate the need for painting or staining as well as the need to use treated lumber and the environmental and health risks associated with the use of pressure treated lumber.

In another embodiment of this invention, CPVC compositions are used to make siding and trim which have an insulating layer. The insulating layer is preferably a layer of polystyrene foam but could be any other insulating material, such as polyurethane foam. The insulating layer is preferably bonded to the CPVC layer with a suitable adhesive. A suitable adhesive for bonding CPVC to polystyrene foam is a moisture cured urethane, such as manufactured by Ashland Chemical Company of Columbus, Ohio U.S.A. and known as ISOGRIP^{®} 3030D. Alternatively, heat and pressure sensitive adhesives can be used as well as latex based adhesives. Preferably, the adhesive remains flexible during use of the article.

The use of an insulating layer, such as foam, gives the siding and trim insulating properties to conserve energy and also makes the siding or trim more rigid. Increased rigidity allows the CPVC layer to be thinner and aids in the installation of the articles to a structure. The siding and trim are attached to a structure by conventional means, such as nailing.

To produce the articles having an insulating layer, the CPVC composition is extruded as described above. The insulating layer is formed to the desired size. The adhesive is applied to the insulating layer or the CPVC extruded profile layer. The adhesive can be applied by roll coating, stitching, extruding, spraying or curtain coating. The adhesive can also be applied in the form of beads which cover only a portion of the CPVC layer. The extruded CPVC is applied to the insulating layer with the adhesive between the layers to form the article. The articles are made in conventional lengths, such as 10 or 20 feet, and transported to a job site.

The siding can be made in conventional widths such as from 4 to 10 inches or can be made in wider widths. The addition of the insulating layer allows the siding to be made wider than conventional siding, if desired. Wider widths can reduce labor in the installation phase of construction. Widths as wide as 30.5, 45.7, 61.0, 91.4 or 121.9 cm (12, 18, 24, 36 or 48 inches) can be made with the insulating layer capped with CPVC. Siding trim pieces are not normally made wider than standard widths, because there is no need for wider trim.

The CPVC layer on the insulated siding and trim will normally be from about 0.381 mm (0.015 inches) to about 1.27 mm (0.050 inch), and preferably from 0.381 mm to 1.02 mm (0.015 to 0.040 inch). The insulating layer is normally a thickness of from about 0.254 cm (0.1 inches) to about 5.08 cm (2.0 inches). PCT Patent Application WO 99/22092 describes a PVC siding product with a foam backing and U.S. Patent 5,542,222 describes a corner post of PVC with a foam backing. The CPVC siding and siding trim components are made similar to those described in the two disclosures above with the exception that the PVC layer is replaced with a CPVC layer which can be in dark colors.

Cap layer(s) can also be applied to the CPVC layer to increase weather resistance. One or more cap layers can be used. For example, a thin cap layer of PVC can be applied to the CPVC layer. In place of a PVC containing cap layer, a cap layer of ASA (acrylonitrile-styrene-acrylate) can be used. The PVC cap layer is normally about 0.0762 mm (0.003 inch) to about 0.254 mm (0.010 inch) thick and can be co-extruded with the CPVC layer. Since the PVC layer has a lower HDT than the CPVC layer, the PVC layer should be thinner than the CPVC layer. A further cap layer of a composition containing a fluoropolymer can be applied to the PVC cap layer or can be applied directly to the CPVC layer. The fluoropolymer cap layer is usually very thin and is about 0.0254 cm (0.001 inch) to about 0.0508 cm (0.002 inch) thick. The fluoropolymer cap layer can be pre-prepared and laminated to the CPVC or PVC layer or can be co-extruded directly onto the CPVC or PVC layer. The fluoropolymer containing cap layer will usually also contain a substantial amount of acrylic polymer in order to gain adhesion to the CPVC or PVC layer. Both the fluoropolymer containing cap layer and the ASA cap layer have better weathering than the CPVC or PVC layer.

### EXAMPLE

This Example presents a specific embodiment of the invention whereby a house siding in a brown color having a L value of 40 is produced with a layer of CPVC, a layer of PVC on top of the CPVC layer, and a layer of a fluoropolymer on top of the PVC layer. The siding also has a layer of polystyrene foam adhered to the CPVC layer.

The CPVC composition used is a commercially available CPVC composition sold under the designation of TempRite^{®} 88023, available from Noveon, Inc. The CPVC composition has a HDT of 103.3°C (218°F) and a chlorine content of 68.25% chlorine.

The CPVC composition is co-extruded with a PVC layer. The CPVC layer is 1.02 mm (0.040 inch) thick and the PVC layer is 0.127 mm (0.005 inch) thick and both were 25.4 cm (10 inches) wide. The PVC composition used has a HDT of 65.6-68.3°C (150-155°F). The PVC layer is introduced just prior to the extrudate exiting the extrusion die. A fluoropolymer film 0.0254 cm (0.001 inch) thick is applied to the CPVC/PVC profile after exiting the die and just before the embosser, while the profile is still hot. The fluoropolymer film used is 78 wt.% acrylic and 22 wt.% PVDF. The fluoropolymer film is applied to the CPVC/PVC profile and the entire combination is put through an embosser and a wood grain finish is pressed into the warm profile. The embossing step results in the fluoropolymer film adhering to the PVC layer.

The profile is then passed through normal thermoplastic sizing equipment and cut to a length of 3.66 m (12 feet). The 3.66 m (12 feet) polystyrene foam layer is adhered to the back of the profile by applying beads of adhesive to the CPVC layer and pressing the foam layer against the adhesive. The resulting siding is packaged for shipment to the installation site.

## Claims

1. A weather resistant article suitable for outdoor construction applications comprising a chlorinated polyvinyl chloride composition having a heat distortion temperature greater than 96.1 °C (205 °F) and comprising a chlorinated polyvinyl chloride polymer, having a chlorine content of from 67 to 71 weight percent, wherein said article has a dark color as evidenced by a L value less than 50.

2. The article of claim 1 having a thickness greater than 0.381 mm (0.015 inch).

3. The article of claim 2 wherein said article is house siding.

4. The article of claim 2 wherein said article is trim articles for exterior house construction.

5. The article of claim 2 wherein said article is decking.

6. The article of claim 2 wherein said article is fencing.

7. The article of claim 2 wherein said article is roofing.

8. The article of claim 1 wherein said article has a dark color as evidenced by a L value less than 40.

9. The article of claim 8 wherein said article has a dark color as evidenced by a L value less than 30.

10. The weather resistant article of claim 1 being extruded rectangular shaped and having four walls having a wall thickness of said article is at least 1.27 mm (0.05 inch).

11. The article of claim 10 wherein said rectangular shaped article is selected from the group consisting of fence post, fence board, railing, roofing and decking.

12. The article of claim 11 wherein said article has a dark color as evidenced by a L value less than 40.

13. The article of claim 12 wherein said article has a dark color as evidenced by a L value less than 30.

## Patentansprüche

1. Wetterbeständiger Artikel, der für Außenbauanwendungen geeignet ist und eine chlorierte Polyvinylchloridzusammensetzung umfasst, die eine Wärmestandfestigkeit von mehr als 96,1 °C (205 °F) aufweist und ein chloriertes Polyvinylchloridpolymer umfasst, das einen Chlorgehalt von 67 bis 71 Gew.-% hat, wobei der Artikel eine dunkle Farbe gemäß einem L-Wert von weniger als 50 hat.

2. Artikel gemäß Anspruch 1, der eine Dicke von mehr als 0,381 mm (0,015 inch) aufweist.

3. Artikel gemäß Anspruch 2, wobei es sich bei dem Artikel um eine Hausverkleidung handelt.

4. Artikel gemäß Anspruch 2, wobei es sich bei dem Artikel um Verkleidungsartikel für den Außenhausbau handelt.

5. Artikel gemäß Anspruch 2, wobei es sich bei dem Artikel um einen Bodenbelag handelt.

6. Artikel gemäß Anspruch 2, wobei es sich bei dem Artikel um eine Umzäunung handelt.

7. Artikel gemäß Anspruch 2, wobei es sich bei dem Artikel um eine Dachabdeckung handelt.

8. Artikel gemäß Anspruch 1, wobei der Artikel eine dunkle Farbe gemäß einem L-Wert von weniger als 40 hat.

9. Artikel gemäß Anspruch 8, wobei der Artikel eine dunkle Farbe gemäß einem L-Wert von weniger als 30 hat.

10. Wetterbeständiger Artikel gemäß Anspruch 1, der in rechteckiger Form extrudiert wird und vier Wände aufweist, die eine Wandstärke von wenigstens 1,27 mm (0,05 inch) aufweisen.

11. Artikel gemäß Anspruch 10, wobei der Artikel mit der rechteckigen Form aus der Gruppe ausgewählt ist, die aus einem Zaunpfosten, einer Zaunplatte, einem Geländer, einer Dachabdeckung und einem Bodenbelag besteht.

12. Artikel gemäß Anspruch 11, wobei der Artikel eine dunkle Farbe gemäß einem L-Wert von weniger als 40 hat.

13. Artikel gemäß Anspruch 12, wobei der Artikel eine dunkle Farbe gemäß einem L-Wert von weniger als 30 hat.

## Revendications

1. Article résistant aux intempéries approprié aux applications de construction extérieurs, comprenant une composition de chlorure de polyvinyle chloré ayant une température de déformation à la chaleur supérieure à 96,1 °C (205 °F) et comprenant un polymère chlorure de polyvinyle chloré ayant un taux de chlore compris entre 67 et 71 pour cent en poids, dans lequel ledit article a une couleur sombre à en juger par une valeur L inférieure à 50.

2. Article selon la revendication 1, ayant une épaisseur supérieure à 0,381 mm (0,015 pouce).

3. Article selon la revendication 2, dans lequel ledit article est un revêtement extérieur de maison.

4. Article selon la revendication 2, dans lequel ledit article est un article de revêtement pour construction de maison extérieure.

5. Article selon la revendication 2, dans lequel ledit article est un revêtement de sol.

6. Article selon la revendication 2, dans lequel ledit article est une clôture.

7. Article selon la revendication 2, dans lequel ledit article est une couverture de toit.

8. Article selon la revendication 1, dans lequel ledit article a une couleur sombre à en juger par une valeur L inférieure à 40.

9. Article selon la revendication 8, dans lequel ledit article a une couleur sombre à en juger par une valeur L inférieure à 30.

10. Article résistant aux intempéries selon la revendication 1, ayant été extrudé dans une forme rectangulaire et ayant quatre parois ayant une épaisseur de parois d'au moins 1,27 mm (0,05 pouce).

11. Article selon la revendication 10, dans lequel ledit article ayant une forme rectangulaire est choisi dans le groupe consistant en un poteau de clôture, une planche de clôture, une balustrade, une couverture de toit et un revêtement de sol.

12. Article selon la revendication 11, dans lequel ledit article a une couleur sombre à en juger par une valeur L inférieure à 40.

13. Article selon la revendication 12, dans lequel ledit article a une couleur sombre à en juger par une valeur L inférieure à 30.
